Europäisches Patentamt

European Patent Office

Office européen des brevets

(11) Veröffentlichungsnummer: **0 260 547**
**B1**

(12) **EUROPÄISCHE PATENTSCHRIFT**

(45) Veröffentlichungstag der Patentschrift:
26.04.89

(51) Int. Cl.⁴: **F16L 33/20**

(21) Anmeldenummer: **87112940.9**

(22) Anmeldetag: **04.09.87**

(54) **Armatur an einem Hochdruckschlauch.**

(30) Priorität: **10.09.86 DE 3630703**

(43) Veröffentlichungstag der Anmeldung:
**23.03.88 Patentblatt 88/12**

(45) Bekanntmachung des Hinweises auf die Patenterteilung:
**26.04.89 Patentblatt 89/17**

(84) Benannte Vertragsstaaten:
**BE DE ES FR GB IT NL SE**

(56) Entgegenhaltungen:
**AT-B- 329 335**
**DE-A- 2 644 396**
**DE-A- 3 045 533**

(73) Patentinhaber: **Continental AG, Königsworther Platz 1 Postfach 1 69, D-3000 Hannover 1(DE)**

(72) Erfinder: **Schwarze, Klaus, Dipl.-Ing., Am Taubenrain 5, D-3540 Korbach(DE)**
Erfinder: **Besche, Anton, Dipl.-Ing., Leipziger Strasse 16, D-3540 Korbach(DE)**
Erfinder: **Thieme, Christian, Scherenbosteler Strasse 59, D-3002 Wedemark 2(DE)**
Erfinder: **Hecker, Rolf, Am Schwimmbad 9, D-3544 Waldeck-Freienhagen(DE)**

## Beschreibung

Die Erfindung betrifft eine Armatur an einem Hochdruckschlauch der im Oberbegriff des Patentanspruchs 1 angegebenen Art, wie sie beispielsweise aus der DE-A 2 242 069 bekannt ist.

Solche Hochdruckschlauch-Armaturen, die durchweg einen in das Schlauchende eingeführten Nippel und eine die Wandung des Schlauches radial gegen den Nippel pressende Klemmhülse aufweisen, werden nicht nur statisch, sondern vor allem auch dynamisch durch die unter Betriebsbedingungen auf sie einwirkenden Druckimpulse erheblichen Belastungen ausgesetzt. Dabei besteht die Hauptforderung, daß der Schlauch an bzw. in der Armatur dauerhaft so fixiert bleiben muß, daß unter keinen Umständen eine Undichtigkeit entsteht, durch die das in ihm transportierte Druckmedium – wie beispielsweise eine Hydraulik-Flüssigkeit – austreten kann. Da im Falle einer Leckage das angeschlossene Hochdrucksystem infolge des Verlustes an Druckmedium und des damit verbundenen Druckabfalles seine Regel- bzw. Steuerfunktion nicht mehr einwandfrei erfüllen oder sogar schlagartig vollständig ausfallen kann, stellt ein nicht zuverlässiger Hochdruckschlauch-Anschluß – beispielsweise im Lenkungs- oder Bremssystem eines Kraftfahrzeuges – ein unzulässiges Sicherheitsrisiko dar.

Bei den bisher verwendeten Schlaucharmaturen ging man davon aus, daß durch an der Innenwandung der Klemmhülse angeordnete umlaufende Rippen – unter Umständen ergänzt durch umlaufende Nuten, die im entsprechenden axialen Abschnitt des Nippels in dessen Mantelfläche eingeformt waren – eine so starke radiale Kompression der Schlauchwandung bewirkt werden könne, daß dadurch der Schlauch nicht nur axial unverrückbar auf dem Nippel fixiert werde, sondern außerdem eine ausreichende, konstante Dichtwirkung zwischen der Schlauchinnenwand und der Nippeloberfläche zu erzielen sei. Bei Steigerung der Anforderungen durch Erhöhung der im Schlauch durch das Druckmedium eingeleiteten Druckwerte und insbesondere der Druckimpulsbeanspruchung zeigte sich jedoch, daß mit diesem Konstruktionsprinzip eine ausreichende Dauerstandfestigkeit der Armaturdichtung nicht realisierbar war. Auch der aus der eingangs genannten DE-OS 2 242 069 entnehmbare Vorschlag, die in die Schlauchwandung eingebetteten Verstärkungseinlagen jenseits des vorstehend beschriebenen, den gesamten Querschnitt der Schlauchwandung komprimierenden Klemmbereichs noch einmal gesondert zu verankern, löste das Dichtungsproblem nicht sicher und dauerhaft genug.

Es stellte sich daher die Aufgabe, eine Schlaucharmatur mit einem Dichtsystem aufzuzeigen, das auch bei dauernder und insbesondere pulsierender bzw. impulsartiger Hochdruckbeanspruchung eine sichere Abdichtung gewährleistete.

Nach der vorliegenden Erfindung wird diese Aufgabe durch eine gattungsgemäße Armatur gelöst, die die im kennzeichnenden Teil des Patentanspruchs 1 angegebenen Merkmale aufweist. Diese konstruktive Lösung fußt auf der Erkenntnis, daß es notwendig ist, an der Armatur die Funktion der axialen Fixierung des Schlauches räumlich von der Funktion des Dichtens zu trennen, und zwar so, daß ein bestimmter axialer Abschnitt der Armatur sämtliche auftretenden axialen Kräfte aufnimmt, während ein benachbarter axialer Abschnitt der Armatur, der hierdurch gegenüber diesen axialen Kräften abgeschirmt ist, ausschließlich der Dichtung dient. Ergänzt wird diese aufgabenspezifische Aufteilung in eine Haltezone und eine dieser nachgeordnete Dichtzone durch eine der Haltezone in Richtung des freien Schlauches vorgeschaltete Übergangszone, in der sich der Querschnitt des das Schlauchende in der Armatur aufnehmenden Ringspaltes stetig vom Durchmesser des freien Schlauches auf den Durchmesser der Haltezone verengt, wodurch für einen entsprechend stetigen Übergang der eingeleiteten Kräfte gesorgt ist.

Vorzugsweise ist der Ringspalt in der Dichtzone so dimensioniert, daß der sich in ihn erstreckende Teil der Schlauchwandung nur geringfügig – d.h. im allgemeinen nicht mehr als 10% – radial komprimiert ist. Durch diese Maßnahme soll vermieden werden, daß in diesem Bereich eine Überpressung der gummielastischen Schlauchwandung und somit eine Beeinträchtigung ihrer Elastizität eintritt, die eine wesentliche Voraussetzung ihrer Dichtfunktion ist. Ermöglicht wird dieser Verzicht auf Kompression in der Dichtzone dadurch, daß in ihr keine betriebsbedingten Axialkräfte wirksam werden können, da diese in der vorgeschalteten Haltezone abgefangen werden.

Um die Einleitung von Axialkräften in die Dichtzone vollends zu unterbinden, ist es vorteilhaft, die in die Wandung des Hochdruckschlauches eingebetteten Verstärkungseinlagen am Übergang von der Haltezone zur Dichtzone ringsum zu durchtrennen, insbesondere sie am Übergang von der Haltezone zur Dichtzone von vornherein enden zu lassen bzw. sie vor der Montage im Bereich der Dichtzone vollständig zu entfernen. In weiterer Ausgestaltung dieses Erfindungsgedankens hat es sich als vorteilhaft erwiesen, im Bereich der Dichtzone die radial äußeren Schichten der Schlauchwandung zu entfernen, und zwar vorzugsweise bis auf die Innengummischicht, die dann allein den entsprechend radial enger bemessenen Ringspalt der Dichtzone ausfüllt und in auch für den Fachmann nicht voraussehbarer und überraschender Weise auch bei hohen Beanspruchungen des Hochdruckschlauches eine dauerhaft sichere Abdichtung gewährleistet.

Vorteilhafte Ausführungsformen der Erfindung können ferner dadurch gekennzeichnet sein, daß die Schlauchinnenwandung im Bereich der Dichtzone stoffschlüssig – d.h., durch Verklebung oder Vulkanisation mit dem Nippel verbunden ist. Auch für die Wirksamkeit dieser Maßnahme schafft die erfindungsgemäße Trennung der Dichtzone von der Haltezone, die jegliche Einwirkung von Axialkräften auf die stoffschlüssige Verbindung verhindert, besonders günstige Voraussetzungen.

Als zusätzliche Maßnahme zur Steigerung der Dichtungssicherheit wird im Rahmen der vorliegenden Erfindung vorgeschlagen, daß der Nippel der Armatur nur im Bereich der Dichtzone mit einem Labyrinth aus mehreren umlaufenden Nuten versehen ist, wobei das Verhältnis der axialen Breite dieser Nuten zu ihrer radialen Tiefe vorzugsweise kleiner als 1 ist und insbesondere zwischen 0,6 und 0,9 beträgt.

Dabei hat es sich als vorteilhaft erwiesen, das Ringspaltvolumen der Dichtungszone und das Volumen des in die Dichtungszone hineinragenden Teils der Schlauchwandung so aufeinander abzustimmen, daß das gummielastische Material der Schlauchinnenwandung, das beim Aufpressen der Klemmhülse auf den Nippel in die Nuten gedrückt wird, nach Fertigstellung der Armatur die Nuten nicht vollständig — insbesondere nicht ganz bis zum Nutengrund — ausfüllt. Hierdurch wird erreicht, daß insbesondere das in die Nuten hineingedrückte Schlauchmaterial auf keinen Fall überpreßt ist und somit seine Elastizität erhalten bleibt, um zweckentsprechend unter allen auftretenden Betriebsbedingungen zu dichten.

Die Zeichnung veranschaulicht die Erfindung an drei bevorzugten Ausführungsbeispielen in vergrößerter, nicht in allen Details maßstäblicher Darstellung:

Die dargestellten erfindungsgemäßen Armaturen weisen einen Hochdruckschlauch 1 mit Verstärkungseinlagen 1.2 auf, der zwischen einem Nippel 2 und einer Klemmhülse 3 fixiert ist. Der Nippel 2 trägt an seinem freien Ende als Montagemittel eine Überwurfmutter 4. Der zwischen dem Nippel 2 und der Klemmhülse 3 gebildete Ringspalt, in dem das Schlauchende verankert ist, weist eine Übergangszone A mit konisch zunehmendem Querschnitt, eine Haltezone B mit umlaufenden, den Querschnitt verengenden und die Schlauchwandung zur Erzeugung der notwendigen Haltekraft komprimierenden Halterippen 3.1, 3.1' und schließlich eine Dichtzone C auf. Der Schlauch 1 reicht mit seinem Stirnende 1.1 an das geschlossene Ende der Dichtzone C, an dem auch der besagte Ringspalt endet. Im Bereich der Dichtzone C weist der Nippel 2 einige Dichtnuten 2.1 auf, die vorzugsweise tiefer als breit ausgebildet sind und für zusätzliche Dichtwirkung sorgen.

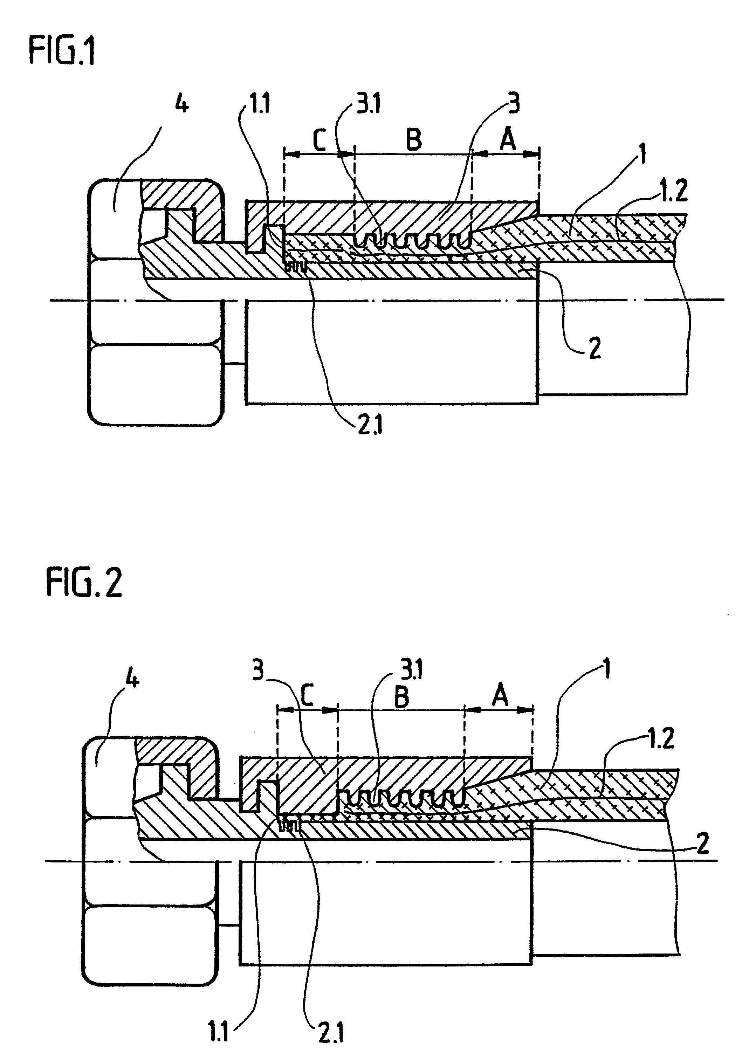

In der Ausführungsform nach Fig. 1 ist der sich in die Dichtzone C erstreckende Endabschnitt der Schlauchwandung erfindungsgemäß nur geringfügig komprimiert, und die Verstärkungseinlagen 1.2 des Hochdruckschlauches 1 sind am Übergang der Haltezone B zur Dichtungszone C ringsum durchtrennt, so daß sich axiale Zugkräfte, die aufgrund von Druckschwankungen und insbesondere Druckimpulsen des Druckmediums in der Schlauchwandung entstehen, nicht über die Verstärkungseinlagen 1.2 in die Dichtzone C eingeleitet werden können.

In der in Fig. 2 dargestellten Variante der Erfindung ist die Einleitung eines axialen Kraftflusses in die Dichtzone C noch wirksamer dadurch verhindert, daß sich die Schlauchwandung nur mit ihrer Innengummischicht in die Dichtzone erstreckt, während alle äußeren Schichten der Schlauchwandung einschließlich der Verstärkungseinlagen 1.2 im Bereich der Dichtzone C entfernt sind. Die Dichtzone C enthält also in dieser Ausführungsform nur die für den Dichtungseffekt optimierte Innengummischicht der Schlauchwandung und kann unbeeinflußt von Axialkräften ihre Dichtfunktion erfüllen.

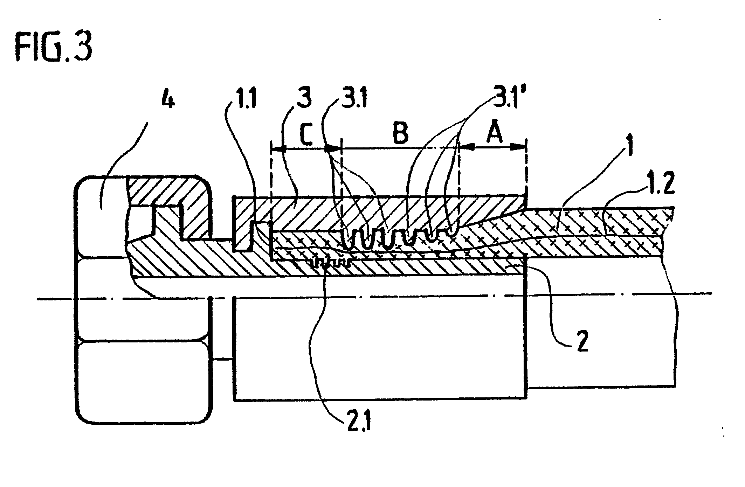

Fig. 3 verdeutlicht ein die erfindungsgemäße Armatur vorteilhaft ergänzendes Merkmal: Die in der Haltezone B an der Innenwandung der Klemmhülse 3 angeordneten Halterippen 3.1 und 3.1' weisen unterschiedliche Höhen auf, und zwar derart, daß die in dem der Übergangszone A benachbarten Teil der Haltezone B gelegenen Halterippen 3.1' sich in geringerem Maße in Richtung der Schlauchachse a erstrecken und somit eine geringere radiale Kompressions- und axiale Haltekraft erzeugen als die in dem der Dichtzone C benachbarten Teil der Haltezone gelegenen Halterippen 3.1, die auf maximalen Haltewirkung ausgelegt sind. Hierdurch wird der Anstieg der Kompressions- und Haltekräfte zwischen den Zonen A und B vergleichmäßigt, und dies trägt zusätzlich dazu bei, daß die erfindungsgemäßen Armaturen gegenüber vergleichbaren, bisher bekannten Armaturen im Hochdruckimpuls-Dauertest eine um ein Mehrfaches erhöhte Lebensdauer erzielen. Vorzugsweise nimmt die radiale Erstreckung der Halterippen 3.1' in Richtung der Übergangszone A von Rippe zu Rippe ab.

## Patentansprüche

1. Armatur an einem Hochdruckschlauch, dessen gummielastische Wandung Verstärkungseinlagen enthält, mit einem in das Schlauchende hineinragenden Nippel und einer das Schlauchende im Bereich des Nippels umfassenden und dichtend gegen den Nippel pressenden Klemmhülse, wobei der zwischen dem Nippel und der Klemmhülse gebildete, das Schlauchende aufnehmende Ringspalt derart axial in Funktionszonen aufgeteilt ist, daß er in dem Bereich, der seinem offenen, dem freien Schlauch zugewandten Ende benachbart ist, eine Übergangszone und in dem sich hieran in Richtung auf das gefaßte Stirnende des Schlauches anschließenden Bereich eine Haltezone aufweist, wobei der Ringspalt in der Übergangszone einen in Richtung seines offenen Endes sich konisch erweiternden Querschnitt besitzt, während er in der Haltezone an mindestens einer der ihn begrenzenden Wandungen umlaufende, seinen Querschnitt verengende und die Schlauchwandung komprimierende Rippen enthält, dadurch gekennzeichnet, daß der das Schlauchende enthaltende Ringspalt zusätzlich eine Dichtzone (C) aufweist, die sich an die Haltezone (B) an ihrer der Übergangszone (A) abgewandten Seite anschließt und sich bis zum Stirnende (1.1) des Schlauches (1) erstreckt, wobei in der Haltezone (B) durch Form- und Kraftschluß auf die Schlauchwandung eine Haltekraft ausgeübt wird, deren axiale Komponente größer ist als die axialen Zugkräfte, die infolge der im Schlauch (1) maximal auftretenden Betriebsdrücke in den in der Armatur gefaßten Endabschnitt der Schlauchwandung eingeleitet werden, so daß diese Zugkräfte in der Haltezone (B) abgebaut und in der Dichtzone (C) nicht wirksam werden.

2. Armatur nach Anspruch 1, dadurch gekennzeichnet, daß die Schlauchwandung im Bereich der Dichtzone (C) nur geringfügig radial komprimiert ist.

3. Armatur nach Anspruch 1 oder 2, dadurch gegebetteten Verstärkungseinlagen (1.2) am Übergang von der Haltezone (B) zur Dichtungszone (C) ringsum durchtrennt sind.

4. Armatur nach Anspruch 1 oder 2, dadurch gekennzeichnet, daß die in den Schlauch (1) eingebetteten Verstärkungseinlagen (1.2) am Übergang von der Haltezone (B) zur Dichtungszone (C) enden bzw. im Bereich der Dichtungszone (C) entfernt sind.

5. Armatur nach einem der Ansprüche 1 bis 4, dadurch gekennzeichnet, daß die radial äußeren Schichten der Schlauchwandung im Bereich der Dichtzone (C) entfernt sind.

6. Armatur nach Anspruch 5, dadurch gekennzeichnet, daß im Bereich der Dichtzone (C) alle Schichten der Schlauchwandung mit Ausnahme der Innengummischicht entfernt sind.

7. Armatur nach einem der Ansprüche 1 bis 6, dadurch gekennzeichnet, daß die Innenwandung des Schlauches nur im Bereich der Dichtungszone (C) mit dem Nippel (2) verklebt ist.

8. Armatur nach einem der Ansprüche 1 bis 6, dadurch gekennzeichnet, daß die Innenwandung des Schlauches (1) nur im Bereich der Dichtzone (C) durch Vulkanisation fest mit dem Nippel (2) verbunden ist.

9. Armatur nach einem der Ansprüche 1 bis 8, dadurch gekennzeichnet, daß der Nippel (2) nur im Bereich der Dichtzone (C) ein Labyrinth aus mehreren unlaufenden Nuten (2.1) aufweist.

10. Armatur nach Anspruch 9, dadurch gekennzeichnet, daß das Verhältnis der axialen Breite zur radialen Tiefe der Nuten (2.1) kleiner als 1 ist.

11. Armatur nach Anspruch 10, dadurch gekennzeichnet, daß das Verhältnis der axialen Breite zur radialen Tiefe der Nuten (2.1) zwischen 0,6 und 0,9 beträgt.

12. Armatur nach einem der Ansprüche 9 bis 11, dadurch gekennzeichnet, daß das gummielastische Material der Innenwandung des Schlauches (1) die Nuten (2.1) nicht vollständig bis zum Nutengrund ausfüllt.

13. Armatur nach einem der Ansprüche 1 bis 12, dadurch gekennzeichnet, daß die in der Haltezone B an der Innenwand der Klemmhülse angeordneten Halterippen (3.1, 3.1') sich in unterschiedlichem Maße in Richtung der Schlauchachse (a) erstrecken, und zwar derart, daß die in dem der Übergangszone (A) benachbarten Teil der Haltezone (B) gelegenen Halterippen (3.1') sich in geringerem Maße in Richtung der Schlauchachse (a) erstrecken als die in dem der Dichtzone (C) benachbarten Teil der Haltezone (B) gelegenen Halterippen (3.1).

14. Armatur nach Anspruch 13, dadurch gekennzeichnet, daß die radiale Erstreckung der in dem der Übergangszone (A) benachbarten Teil der Haltezone (B) gelegenen Halterippen (3.1') von Rippe zu Rippe in Richtung der Übergangszone (A) abnimmt.

## Claims

1. Fitting on a high-pressure hose, the rubber-elastic wall of which hose includes reinforcing inserts, comprising a nipple, which protrudes into the end of the hose, and a clamping sleeve, which surrounds the end of the hose in the region of the nipple and presses it sealingly against the nipple, the annular gap which is formed between the nipple and the clamping sleeve and accommodates the end of the hose being axially divided into function zones in such a manner that it has a transition zone in the region adjacent to its open end facing the free hose and a retaining zone in the region connected thereto in the direction of the gripped leading end of the hose, the annular gap in the transition zone having a cross-section which conically widens in the direction of its open end, whilst the annular gap comprises circumferential ribs, which reduce its cross-section and compress the wall of the hose, in the retaining zone on at least one of the walls defining it, characterised in that the annular gap, which includes the end of the hose, additionally has a sealing zone (C) which communicates with the retaining zone (B) at its end remote from the transition zone (A) and extends to the leading end (1.1) of the hose (1), a retaining force being exerted upon the wall of the hose in the retaining zone (B) by form- and force-locking means, the axial component of said retaining force being greater than the axial tensile forces which are introduced into the end portion of the hose wall, which is gripped in the fitting, as a consequence of the operational pressures occurring at a maximum in the hose (1), so that these tensile forces are reduced in the retaining zone (B) and do not become effective in the sealing zone (C).

2. Fitting according to claim 1, characterised in that the wall of the hose is compressed only slightly radially in the region of the sealing zone (C).

3. Fitting according to claim 1 or 2, characterised in that the reinforcing inserts (1.2), which are embedded in the wall of the hose, are severed-through on all sides at the transition from the retaining zone (B) to the sealing zone (C).

4. Fitting according to claim 1 or 2, characterised in that the reinforcing inserts (1.2), which are embedded in the hose (1), terminate at the transition from the retaining zone (B) to the sealing zone (C), or that is to say they are discontinued in the region of the sealing zone (C).

5. Fitting according to any of claims 1 to 4, characterised in that the radially outer layers of the hose wall are discontinued in the region of the sealing zone (C).

6. Fitting according to claim 5, characterised in that all of the layers of the hose wall, with the exception of the inner rubber layer, are discontinued in the region of the sealing zone (C).

7. Fitting according to any of claims 1 to 6, characterised in that the inner wall of the hose is adhered to the nipple (2) only in the region of the sealing zone (C).

8. Fitting according to any of claims 1 to 6, characterised in that the inner wall of the hose (1) is securely connected to the nipple (2) by means of vulcanisation only in the region of the sealing zone (C).

9. Fitting according to any of claims 1 to 8, characterised in that the nipple (2) has a labyrinth formed from a plurality of circumferential grooves (2.1) only in the region of the sealing zone (C).

(2.1) only in the region of the sealing zone (C).

10. Fitting according to claim 9, characterised in that the ratio of the axial width to the radial depth of the grooves (2.1) is less than 1.

11. Fitting according to claim 10, characterised in that the ratio of the axial width to the radial depth of the grooves (2.1) is between 0.6 and 0.9.

12. Fitting according to any of claims 9 to 11, characterised in that the rubber-elastic material of the inner wall of the hose (1) does not entirely fill the grooves (2.1) down to the bottom of the grooves.

13. Fitting according to any of claims 1 to 12, characterised in that the retaining ribs (3.1, 3.1'), which are disposed in the retaining zone (B) on the inner wall of the clamping sleeve, extend to varying degrees in the direction of the hose axis (a), in such a manner that the retaining ribs (3.1'), which are disposed in the portion of the retaining zone (B) adjacent the transition zone (A), extend in the direction of the hose axis (a) to a lesser degree than the retaining ribs (3.1) which are disposed in the portion of the retaining zone (B) adjacent the sealing zone (C).

14. Fitting according to claim 13, characterised in that the radial extension of the retaining ribs (3.1'), which are disposed in the portion of the retaining zone (B) adjacent the transition zone (A), decreases from rib to rib in the direction of the transition zone (A).

## Revendications

1. Raccord pour tuyau à haute pression dont la paroi, possédant l'élasticité du caoutohouc, renferme des insertions de renforcement, comprenant un embout qui pénètre dans l'extrémité du tuyau et une douille de serrage qui entoure l'extrémité du tuyau dans la région de l'embout et presse cette extrémité contre l'embout pour former un joint étanche, la fente annulaire formée entre l'embout et la douille de serrage et qui reçoit l'extrémité du tuyau, étant divisée axialement en deux zones fonctionnelles de manière à présenter, dans la région qui est adjacente à son extrémité ouverte, dirigée vers le tuyau libre, une zone de transition, puis une zone de fixation dans la région qui fait suite à la première en se dirigeant vers l'extrémité frontale enfermée du tuyau, la fente annulaire présentant dans la zone de transition une section qui s'élargit avec un profil conique en se dirigeant vers son extrémité ouverte, tandis que, dans la zone de fixation, elle présente, au moins sur l'une des parois qui la limitent, des côtes circonférentielles qui rétrécissent sa section et qui compriment la paroi du tuyau, caractérisé en ce que la fente annulaire qui renferme l'extrémité du tuyau présente en supplément une zone d'étanchéité (C), qui fait suite à la zone de fixation (B) sur le côté de cette dernière qui est à l'opposé de la zone de transition (A), et s'étend jusqu'à l'extrémité frontale (1.1) du tuyau (1), cependant que, dans la zone de fixation (B), et grâce à l'établissement d'une liaison par sûreté de forme et par action de force, il s'exerce sur la paroi du tuyau une force de fixation dont la composante axiale est plus grande que les forces de traction axiales qui sont introduites dans le segment terminal de la paroi du tuyau qui est enfermé dans le raccord, par les pressions de service maximales qui peuvent se manifester dans le tuyau (1), de sorte que ces forces de traction sont absorbées dans la zone de fixation (B) et qu'elles n'exercent plus d'action dans la zone d'étanchéité (C).

2. Raccord selon la revendication 1, caractérisé en ce que la paroi du tuyau n'est que légèrement comprimée radialement dans la région de la zone d'étanchéité (C).

3. Raccord selon la revendication 1 ou la revendication 2, caractérisé en ce que les insertions de renforcement (1.2) sont noyées dans la paroi du tuyau sont coupées sur tout le tour au droit de la transition entre la zone de fixation (B) et la zone d'étanchéité (C).

4. Raccord selon la revendication 1 ou 2, caractérisé en ce que les insertions de renforcement (1.2) noyées dans le tuyau (1) se terminent à la transition entre la zone de fixation (B) et la zone d'étanchéité (C) ou sont éliminées dans la région de la zone d'étanchéité (C).

5. Raccord selon une des revendications 1 à 4, caractérisé en ce que les couches radialement extérieures de la paroi du tuyau sont éliminées dans la région de la zone d'étanchéité (C).

6. Raccord selon la revendication 5, caractérisé en ce que toutes les couches de la paroi du tuyau, à l'exception de la couche de caoutchouc intérieure, sont éliminées dans la région de la zone d'étanchéité (C).

7. Raccord selon une des revendications 1 à 6, caractérisé en ce que la paroi intérieure du tuyau est collée à l'embout (2) uniquement dans la région de la zone d'étanchéité (C).

8. Raccord selon une des revendications 1 à 6, caractérisé en ce que la paroi intérieure du tuyau (1) n'est assemblée solidement à l'embout (2) par vulcanisation que dans la région de la zone d'étanchéité (C).

9. Raccord selon une des revendications 1 à 8, caractérisé en ce que l'embout présente un labyrinthe formé de plusieurs gorges circonférentielles (2.1) uniquement dans la région de la zone d'étanchéité.

10. Raccord selon la revendication 9, caractérisé en ce que le rapport liant la largeur axiale des gorges (2.1) à leur profondeur radiale est inférieur à 1.

11. Raccord selon la revendication 10, caractérisé en ce que le rapport liant la largeur axiale des gorges (2.1) à leur profondeur radiale est compris entre 0,6 et 0,9.

12. Raccord selon une des revendications 9 à 11, caractérisé en ce que la matière de la paroi intérieure du tuyau (1) qui possède l'élasticité du caoutchouc ne remplit pas entièrement les gorges (2.1) jusqu'au fond de ces gorges.

13. Raccord selon une des revendications 1 à 12, caractérisé en ce que les côtes de fixation (3.1, 3.1') prévues sur la paroi intérieure de la douille de serrage dans la zone de fixation (B) se prolongent vers l'axe (a) du tuyau avec des hauteurs variables et, plus précisément, de telle manière que les côtes de fixation (3.1') situées dans la partie de la zone de fixation (B) qui est adjacente à la zone de transition (A) s'étendent moins loin vers l'axe (a) du tuyau que les côtes de fixation (3.1) situées dans la partie de la zone de fixation (B) qui est adjacente à la zone d'étanchéité (C).

14. Raccord selon la revendication 13, caractérisé en ce que la dimension radiale des côtes de fixation (3.1') situées dans la partie de la zone de fixation (B) qui est adjacente à la zone de transition (A) diminue d'une côte à la suivante en direction de la zone de transition (A).

FIG.1

FIG.2

**FIG.3**